# EUROPEAN PATENT APPLICATION

(11) **EP 4 527 676 A2**
(43) Date of publication of application: **26.03.2025**
(21) Application number: 24187270.4
(22) Date of filing: 09.07.2024
(51) Int. Cl.: B60L 53/12, B60L 53/122, B60L 53/124, B60L 53/126

(54) **APPARATUS AND METHOD FOR CONTROLLING WIRELESS CHARGING**

(30) Priority: 20.09.2023 KR 20230125747
(71) Applicant: HYUNDAI MOBIS CO., LTD., Seoul 06141 (KR)
(72) Inventor: SON, Dae Gon, Seoul 07030 (KR)
(74) Representative: Frenkel, Matthias Alexander

(57) **Abstract**

An apparatus for wireless charging, and a method therefor are provided. The apparatus includes: a sensor to detect at least one foreign object (FO) present on a wireless charging road or detect a location of a wireless power receiver of a vehicle; a transceiver to transmit and receive messages to and from a management server that manages the wireless charging road; and a controller to control the sensor and the transceiver. The controller identifies at least one of wireless power transmitters of a wireless charger corresponding to a location where the foreign object (FO) present on the wireless charging road was detected; and deactivates the identified wireless power transmitter.

## Description

### BACKGROUND

### 1. Field

The embodiments of the present disclosure relate to an apparatus for wireless charging and a method for the same, and more particularly to an apparatus and method for increasing the efficiency of wireless charging.

### 2. Description of the Related Art

As technology of electric vehicles and technology of autonomous driving have rapidly developed, it is expected that various occupants (hereinafter referred to as "users") will be able to engage in various activities within the vehicle. For example, a user may be a fallback-ready user (FRU) and thus be able to watch video or moving images or participate in video conferences, as long as he or she remains aware of the vehicle's surroundings and can be ready for fallback.

With the advent of the autonomous driving era, various sensors are being installed within vehicles. For example, cameras, microphone sensors, and heat detection sensors may be installed to check objects within the vehicle.

It is expected that infrastructures will be introduced to enable wireless charging of autonomous driving vehicles while driving through various sensors, wireless communication devices, or the like.

Within the above-described environment, a wireless charging transmitter will be buried under a road surface. If there are foreign objects on the road surface, wireless charging efficiency may be reduced or wireless charging may not be possible. In addition, since wireless charging is performed while the vehicle is driving, it is necessary to consider wireless charging efficiency with respect to driving information (e.g., driving speed, temperature, etc.) or the driving environment.

### SUMMARY

This summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An object of the present disclosure is to provide an enhancement of efficiency for wireless charging while driving.

Another object of the present disclosure is to provide identifying a wireless power transmitter corresponding to a location where a foreign object on a wireless charging road was detected.

Another object of the present disclosure is to provide deactivating a wireless power transmitter corresponding to a location where a foreign object on a wireless charging road was detected.

Another object of the present disclosure is to provide generating power for wireless charging based on air temperature around a wireless charging road and/or surface temperature of the wireless charging road.

Technical subjects to be solved by the present disclosure are not limited to the above-mentioned technical solutions, and it should be noted that other technical subjects not described above can be understood by those skilled in the art from the description of the present disclosure below. In a general aspect of the disclosure, an apparatus for wireless charging, includes: a sensor configured to detect at least one foreign object (FO) present on a wireless charging road or detect a location of a wireless power receiver of a vehicle; a transceiver configured to transmit and receive messages to and from a management server that manages the wireless charging road; and a controller configured to control the sensor and the transceiver, wherein the controller is further configured to: identify at least one of wireless power transmitters of a wireless charger corresponding to a location where the foreign object (FO) present on the wireless charging road was detected; and deactivate the identified wireless power transmitter.

The controller may be further configured to transmit a warning alarm message including information about the identified wireless power transmitter to the management server.

The controller may be further configured to transmit a foreign object (FO) detection message including information about the identified wireless power transmitter to the management server.

The controller may be further configured to receive, from the management server, a foreign object (FO) removal completion message including information about the identified wireless power transmitter.

The controller may be further configured to activate the deactivated wireless power transmitter upon receiving the foreign object (FO) removal completion message.

The sensor may be further configured to detect a foreign object (FO) present on the wireless charging road by using charging state record information of consecutive wireless charging transmitters located on the wireless charging road.

The apparatus may further include a plurality of wireless power switches configured to: supply power received from a power grid to each of the wireless power transmitters; or block power received from the power grid from being supplied to each of the wireless power transmitters.

In another general aspect of the disclosure, an apparatus for wireless charging, includes: a sensor configured to detect a wireless charging vehicle on a wireless charging road; a transceiver configured to transmit and receive messages to and from the wireless charging vehicle; and a controller configured to control the sensor and the transceiver, wherein the controller is configured to: determine a resonant frequency for wireless charging, based on at least one of a driving speed of the wireless charging vehicle, a road surface temperature of the wireless charging road, an air temperature around the wireless charging road, or any combination thereof; control the transceiver to transmit information related to the determined resonant frequency to the wireless charging vehicle; and control generation of power required for wireless charging at the determined resonant frequency.

The controller may be further configured to at least one of: determine a resonant frequency for each wireless charging transmitter according to the driving speed; determine a resonant frequency for a wireless charging transmission group consisting of at least two wireless charging transmitters according to the driving speed; or a combination thereof.

The controller may be further configured to determine a resonant frequency for wireless charging based on seasonal or hourly temperature change information.

In yet another general aspect of the disclosure, a method for an apparatus for wireless charging, includes: detecting one or more foreign objects present on a wireless charging road and a location of a wireless power receiver for a wireless charging vehicle, or a combination thereof; communicating with a management server that manages the wireless charging road; identifying one or more wireless power transmitters of a wireless charger based on a location where the foreign objects were detected; and deactivating the identified one or more wireless power transmitters.

The method may further include: determining a resonant frequency for wireless charging, based on at least one of a driving speed of the wireless charging vehicle, a road surface temperature of the wireless charging road, an air temperature around the wireless charging road, or any combination thereof; transmitting information related to the determined resonant frequency to the wireless charging vehicle; and generating power required for wireless charging at the determined resonant frequency.

The method may further include determining a resonant frequency for each wireless charging transmitter according to the driving speed.

The method may further include determining a resonant frequency for a wireless charging transmission group consisting of at least two wireless charging transmitters according to the driving speed.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is an overall block diagram illustrating an autonomous vehicle to which an autonomous driving apparatus can be applied.
FIG. 2 is a schematic diagram illustrating an example vehicle to which an autonomous driving apparatus is applied.
FIG. 3 is a schematic diagram illustrating a system for wireless charging.
FIG. 4 is a flowchart illustrating a method for controlling wireless charging according to the proposed technology.
FIG. 5 is a flowchart illustrating a method for controlling wireless charging according to the proposed technology.
FIG. 6 is a flowchart illustrating a method for controlling wireless charging according to the proposed technology.
FIG. 7 is a flowchart illustrating a method for controlling wireless charging according to the proposed technology.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "passenger", "driver" "user" etc. are mentioned for description of the present disclosure, and may be used interchangeably therewith.

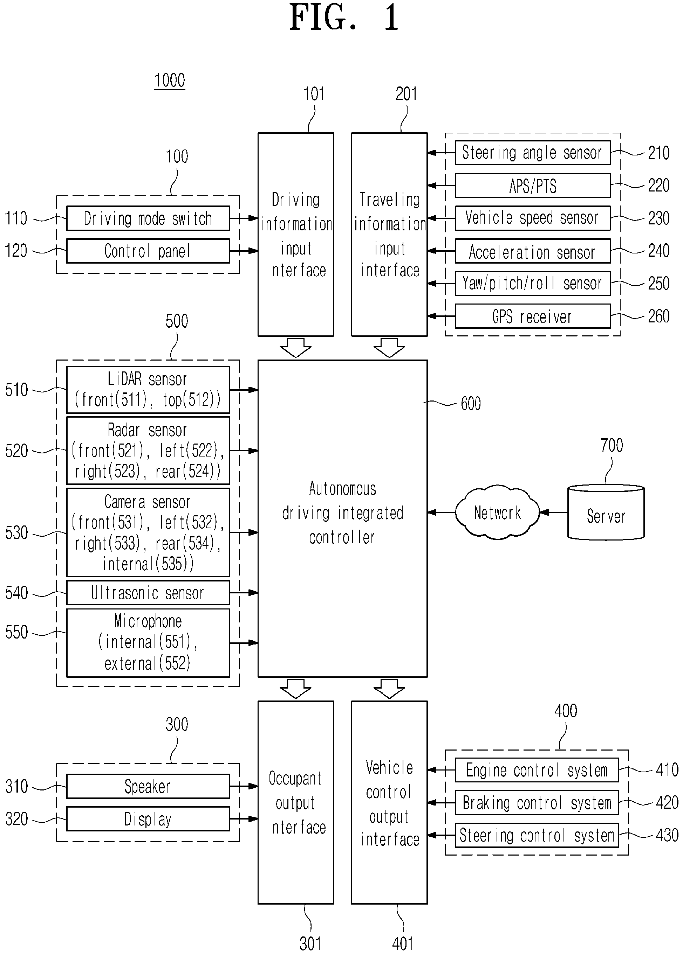

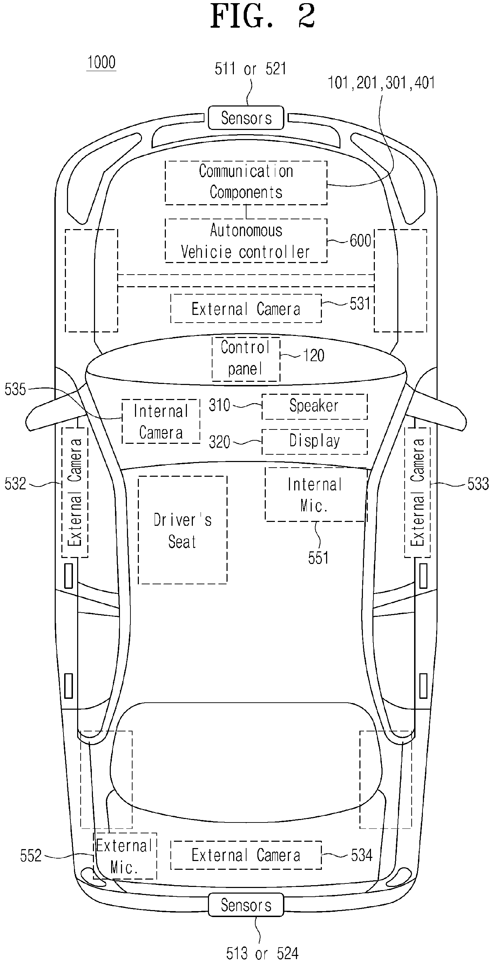

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, a vehicle control output interface 401, and a network via a server 700. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

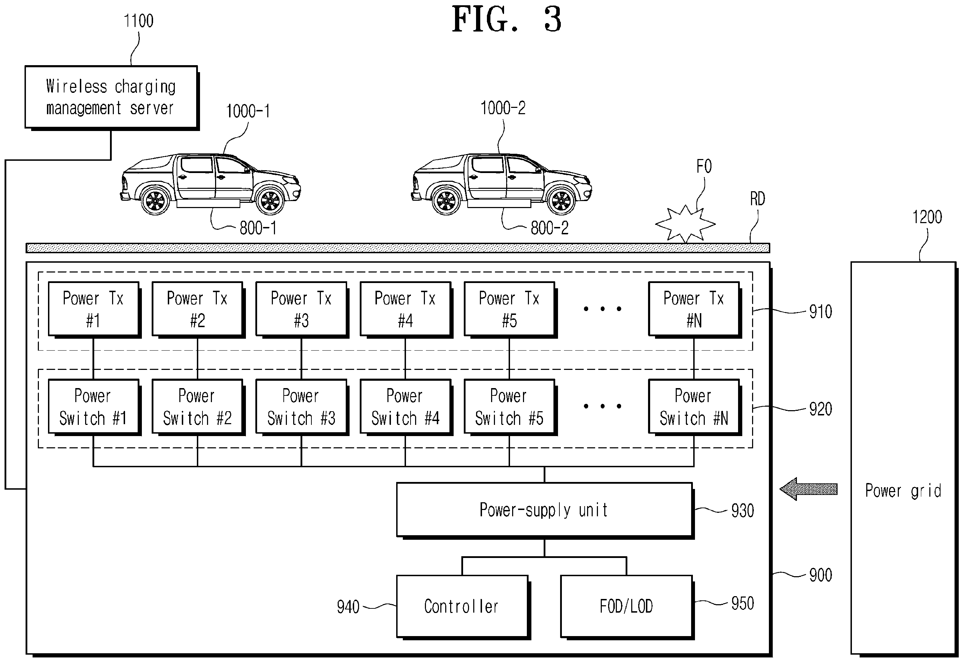

FIG. 3 is a schematic diagram illustrating a system for wireless charging during vehicle driving.

Referring to FIG. 3, the system may include vehicles (1000-1, 1000-2) respectively containing rechargeable batteries (800-1, 800-2), a wireless charger 900, a wireless charging management server 1100, and a power grid 1200.

A plurality of wireless transmission coils (or wireless power transmitters) 910 of the wireless charger 900 may be buried under a road (RD). Accordingly, the vehicle 1000 may perform wireless charging while driving on the road (RD).

The wireless charger 900 may include a plurality of power switches 920, a power-supply unit 930, a controller 940, and a foreign object detector/location detector (FOD/LOD) 950. Each of the power switches 920 may supply power received from the power grid 1200 to a respective one of the wireless transmission coils 910 through the power-supply unit 930 or may block power received from the power grid 1200 from being supplied to a respective one of the wireless transmission coils 910 through the power-supply unit 930. The power-supply unit 930 may supply power to the wireless transmission coils 910. The controller 940 may control the power-supply unit. The FOD/LOD 950 may sense the location of an external object or a reception coil.

Referring to FIG. 3, the wireless charging vehicle 1000-1 is located on the road (RD) corresponding to the wireless power transmitter #2 and the wireless charging vehicle 1000-2 is located on the road (RD) corresponding to the wireless power transmitter #5. In order to provide the wireless charging vehicles (1000-1, 1000-2) with the wireless charging service, the power switch #1 and the power switch #5 must be turned on, so that power from the power grid 1200 is provided to each of the wireless power transmitter #2 and the wireless power transmitter #5.

FIG. 3 shows that there is a foreign object (FO) (e.g., foreign substances) at an upper position of the road (RD) corresponding to the wireless power transmitter #N.

In FIG. 3, the wireless power transmitter 910 is shown as being matched in one-to-one correspondence with the power switch 920. However, only one power switch 920 and two or more wireless power transmitters 920 may be matched to each other.

The wireless charging management server 1100 may manage the wireless charger 900, and may control initiation and termination of wireless charging of the vehicles (1000-1, 1000-2).

The power grid 1200 refers to a power system, for example, a power transmission system, a power distribution system, and a power generation system that can supply power to the wireless charger 900.

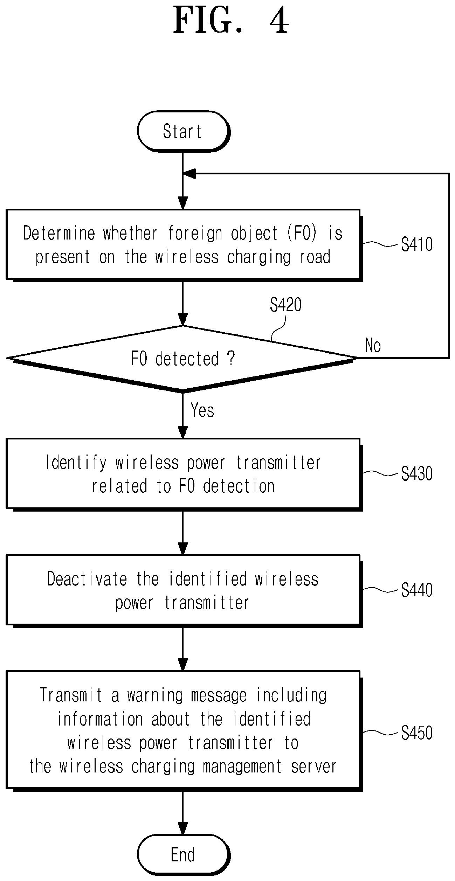

FIG. 4 is a flowchart illustrating a method for controlling wireless charging of the vehicle according to the proposed technology. The operation according to the flowchart of FIG. 4 may be performed by the wireless charging device 900 or components (e.g., a controller, a processor, etc.) of the wireless charging device 900, but is not limited thereto. The wireless charging management server 1100 may be integrated with the wireless charger 900.

The wireless charger 900 may include a transceiver for transmitting and receiving messages to and from the wireless charging management server 1100, the power grid 1200, or the vehicles (1000-1, 1000-2); and a controller for controlling the transceiver.

The wireless charger 900 may check whether foreign objects (FOs) exist on the road for wireless charging (S410).

Such foreign objects (FOs) can be detected in a direct or indirect manner.

In the direct manner, FO detection may be performed using sensor(s) such as camera(s), etc.

In addition, FO detection may be indirectly performed based on a charging state or power consumption of the wireless power transmitter 910. That is, there is a high possibility that wireless charging of the wireless power transmitter 910 having low power consumption is being interrupted by foreign objects (FOs) present on the wireless charging road.

The wireless charger 900 may check whether foreign object (FO) detection has been performed (S420).

As foreign objects (FOs) present on the wireless charging road have been detected, the wireless charger 900 may identify the wireless power transmitter corresponding to the location where FO detection was completed (S430).

The wireless charger 900 may deactivate the identified wireless power transmitter (S440). Here, deactivating the wireless power transmitter may include controlling power supply to the wireless power transmitter.

The wireless charger 900 may transmit a warning message including information about the identified wireless power transmitter to the wireless charging management server 1100 (S450). The warning message may include a request required to remove foreign objects (FOs), and information about the wireless power transmitter may include an identifier of the wireless power transmitter.

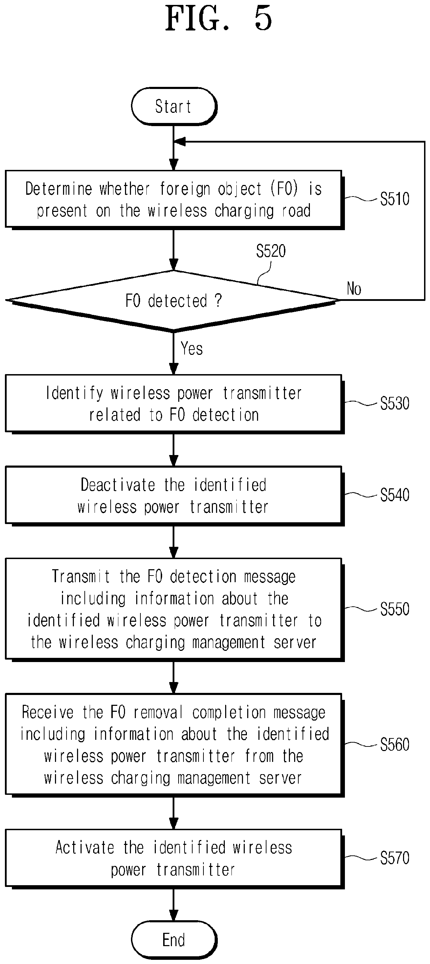

FIG. 5 is a flowchart illustrating a method for controlling wireless charging according to the proposed technology. The operation according to the flowchart of FIG. 5 may be performed by the wireless charging device 900 or components (e.g., a controller, a processor, etc.) of the wireless charging device 1100, but is not limited thereto. The wireless charging management server 1100 may be integrated with the wireless charger 900.

The wireless charger 900 may include a transceiver for transmitting and receiving messages to and from the wireless charging management server 1100, the power grid 1200 or the vehicles (1000-1, 1000-2); and a controller for controlling the transceiver.

Since steps S510 to S540 of FIG. 5 are equal to steps S410 to S440 of FIG. 4, a detailed description thereof will herein be omitted for brevity.

The wireless charger 900 may transmit to the wireless charging management server 1100, a foreign object (FO) detection message including information about the wireless power transmitter (S550). Here, the FO detection message is obtained after FO detection. The FO detection message may include a request for FO removal. Information about the wireless power transmitter may include an identifier (ID) of the wireless power transmitter.

The wireless charger 900 may receive from the wireless charging management server 1100, a foreign object (FO) removal completion message including information about the wireless power transmitter (S560). Upon receiving the FO detection message, the wireless charging management server 1100 may initiate a procedure for removing foreign objects (FOs) from the wireless charging road. When FO removal is completed, the wireless charging management server 1100 may transmit the FO removal completion message to the wireless charger 900.

The wireless charger 900 may activate the wireless power transmitter from which foreign objects (FOs) have been removed (S570).

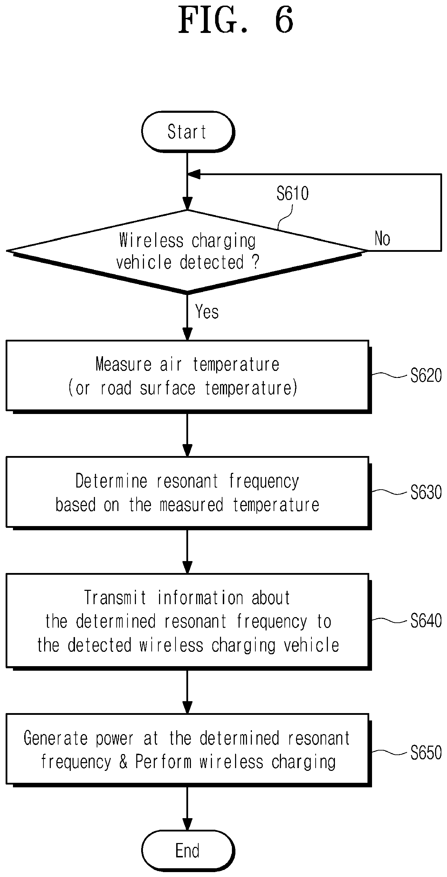

FIG. 6 is a flowchart illustrating a method for controlling wireless charging according to the proposed technology. The operation according to the flowchart of FIG. 6 may be performed by the wireless charging device 900 or components (e.g., a controller, a processor, etc.) of the wireless charging device 1100, but is not limited thereto. The wireless charging management server 1100 may be integrated with the wireless charger 900.

The wireless charger 900 may include a transceiver for transmitting and receiving messages to and from the wireless charging management server 1100, the power grid 1200 or the vehicles (1000-1, 1000-2); and a controller for controlling the transceiver.

The wireless charger 900 may detect whether there is a wireless charging vehicle on the wireless charging road (S610).

As the wireless charging vehicle present on the wireless charging road has been detected, the wireless charger 900 can measure air temperature around the wireless charging road or the temperature of the wireless charging road surface (S620). To this end, the wireless charger 900 may include a sensor for temperature measurement.

Alternatively, as the wireless charging vehicle present on the wireless charging road has been detected, the wireless charger 900 may obtain the air temperature around the wireless charging road or the temperature of the wireless charging road surface (S620). This means that the wireless charger 900 obtains temperature information from the sensor for temperature measurement without directly measuring the temperature, or obtains, from the external device and/or the system, temperature information of a region where the wireless charging road is located.

The wireless charger 900 may determine a resonant frequency for wireless charging based on the measured temperature (S630).

A relationship between the temperature and the resonant frequency for wireless charging may be defined, and the wireless charger 900 may obtain information about the relationship. Determination or adjustment of the resonant frequency serves to optimize wireless charging efficiency.

Additionally, the wireless charger 900 can obtain seasonal or hourly temperature change information. The wireless charger 900 may determine a resonant frequency for wireless charging based on the obtained temperature change information.

The wireless charger 900 may transmit information about the determined resonant frequency to the detected wireless charging vehicle (S640).

The wireless charger 900 may generate power at the determined resonant frequency and perform wireless charging for the detected wireless charging vehicle (S650).

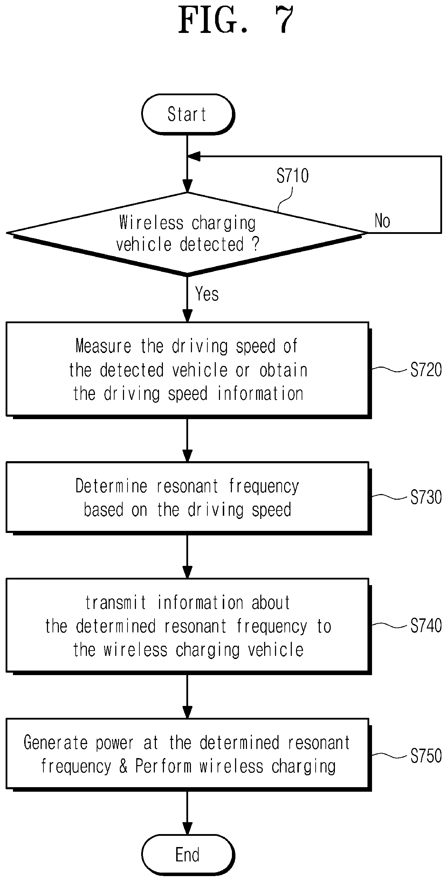

FIG. 7 is a flowchart illustrating a method for controlling wireless charging according to the proposed technology. The operation according to the flowchart of FIG. 7 may be performed by the wireless charging device 900 or components (e.g., a controller, a processor, etc.) of the wireless charging device 1100, but is not limited thereto. The wireless charging management server 1100 may be integrated with the wireless charger 900.

The wireless charger 900 may include a transceiver for transmitting and receiving messages to and from the wireless charging management server 1100, the power grid 1200 or the vehicles (1000-1, 1000-2); and a controller for controlling the transceiver.

Since steps S710, S740, and S750 of FIG. 7 are equal to steps S610, S640, and S650 of FIG. 6, a detailed description thereof will herein be omitted for brevity.

The wireless charger 900 may measure the driving speed of the detected vehicle or obtain information about the driving speed (S720). To this end, the wireless charger 900 may include a sensor for measuring the speed.

The wireless charger 900 may determine a resonant frequency for wireless charging based on the detected driving speed of the wireless charging vehicle (S730).

A relationship between the temperature and the resonant frequency for wireless charging may be defined, and the wireless charger 900 may obtain information about the relationship. Determination or adjustment of the resonant frequency serves to optimize wireless charging efficiency.

Additionally, the wireless charger 900 may determine a resonant frequency for each wireless charging transmitter according to the driving speed, or may determine a resonant frequency for a wireless charging transmission group consisting of two or more wireless charging transmitters.

Although the above-described embodiments of the present disclosure have disclosed that the device (or apparatus) for controlling a user interface (UI) and components included therein perform such control for convenience of description, the device (or apparatus) and the components belonging thereto are names only and the scope of rights is not dependent thereon.

In other words, the proposed technology of the present disclosure may be performed by devices having names other than the control device. In addition, the method, scheme, or the like described above may be performed by software or code readable by a computer or other machine or device for vehicle control.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

As is apparent from the above description, the method and apparatus according to the embodiments of the present disclosure have the following effects.

The method and apparatus according to the embodiments of the present disclosure can efficiently manage wireless charging infrastructure, and can appropriately control or manage wireless charging efficiency according to the driving information or the driving environment.

It will be apparent to those skilled in the art that various modifications and variations can be made in the present disclosure without departing from the spirit or scope of the disclosures. Thus, it is intended that the present disclosure covers the modifications and variations of this disclosure provided they come within the scope of the appended claims and their equivalents.

## Claims

1. An apparatus for wireless charging, comprising:
a sensor configured to detect at least one foreign object (FO) present on a wireless charging road or detect a location of a wireless power receiver of a vehicle;
a transceiver configured to transmit and receive messages to and from a management server that manages the wireless charging road; and
a controller configured to control the sensor and the transceiver,
wherein the controller is further configured to:
identify at least one of wireless power transmitters of a wireless charger corresponding to a location where the foreign object (FO) present on the wireless charging road was detected; and
deactivate the identified wireless power transmitter.

2. The apparatus according to claim 1, wherein the controller is further configured to:
transmit a warning alarm message including information about the identified wireless power transmitter to the management server.

3. The apparatus according to claim 1 or 2, wherein the controller is further configured to:
transmit a foreign object (FO) detection message including information about the identified wireless power transmitter to the management server.

4. The apparatus according to any one of claims 1 to 3, wherein the controller is further configured to:
receive, from the management server, a foreign object (FO) removal completion message including information about the identified wireless power transmitter.

5. The apparatus according to claim 4, wherein the controller is further configured to:
activate the deactivated wireless power transmitter upon receiving the foreign object (FO) removal completion message.

6. The apparatus according to any one of claims 1 to 5, wherein the sensor is further configured to:
detect a foreign object (FO) present on the wireless charging road by using charging state record information of consecutive wireless charging transmitters located on the wireless charging road.

7. The apparatus according to any one of claims 1 to 6, further comprising:
a plurality of wireless power switches configured to:
supply power received from a power grid to each of the wireless power transmitters; or
block power received from the power grid from being supplied to each of the wireless power transmitters.

8. An apparatus for wireless charging, comprising:
a sensor configured to detect a wireless charging vehicle on a wireless charging road;
a transceiver configured to transmit and receive messages to and from the wireless charging vehicle; and
a controller configured to control the sensor and the transceiver,
wherein the controller is configured to:
determine a resonant frequency for wireless charging, based on at least one of a driving speed of the wireless charging vehicle, a road surface temperature of the wireless charging road, an air temperature around the wireless charging road, or any combination thereof;
control the transceiver to transmit information related to the determined resonant frequency to the wireless charging vehicle; and
control generation of power required for wireless charging at the determined resonant frequency.

9. The apparatus according to claim 8, wherein the controller is further configured to at least one of:
determine a resonant frequency for each wireless charging transmitter according to the driving speed;
determine a resonant frequency for a wireless charging transmission group consisting of at least two wireless charging transmitters according to the driving speed; or
a combination thereof.

10. The apparatus according to claim 8 or 9, wherein the controller is further configured to:
determine a resonant frequency for wireless charging based on seasonal or hourly temperature change information.

11. A method for an apparatus for wireless charging, the method comprising:
detecting one or more foreign objects present on a wireless charging road and a location of a wireless power receiver for a wireless charging vehicle, or a combination thereof;
communicating with a management server that manages the wireless charging road;
identifying one or more wireless power transmitters of a wireless charger based on a location where the foreign objects were detected; and
deactivating the identified one or more wireless power transmitters.

12. The method according to claim 11, further comprising:
determining a resonant frequency for wireless charging, based on at least one of a driving speed of the wireless charging vehicle, a road surface temperature of the wireless charging road, an air temperature around the wireless charging road, or any combination thereof;
transmitting information related to the determined resonant frequency to the wireless charging vehicle; and
generating power required for wireless charging at the determined resonant frequency.

13. The method according to claim 12, further comprising:
determining a resonant frequency for each wireless charging transmitter according to the driving speed.

14. The method according to claim 13, further comprising:
determining a resonant frequency for a wireless charging transmission group consisting of at least two wireless charging transmitters according to the driving speed.
